# EUROPEAN PATENT SPECIFICATION

(11) **EP 1 724 129 B1**
(45) Date of publication and mention of the grant of the patent: **19.03.2008**
(21) Application number: 05425335.6
(22) Date of filing: 18.05.2005
(51) Int. Cl.: B60C 25/05

(54) **A device for debeading tyres from wheels positioned on a turntable of a tyre-removing machine**
Vorrichtung zum Wulstabdrücken eines auf einem Drehteller einer Reifen-Montagemaschine montierten Rads
Dispositif de décoincement du talon d'un pneumatique d'une roue montée sur le plateau tournant d'une machine de démontage de pneumatiques.

(43) Date of publication of application: 22.11.2006
(73) Proprietor: Snap-on Equipment S.r.l., 42015 Correggio (RE) (IT)
(72) Inventor: Spaggiari, Rino, 42015 Correggio (IT)
(74) Representative: Gotra, Stefano

(56) References cited:
- EP-A- 1 155 880
- US-A- 5 226 465

## Description

Specifically, though not exclusively, the invention relates to a tool and mechanisms for unseating the bead of a tyre from the edge of a rim of a wheel positioned on the turntable of a tyre-removing machine.

The debeading operation is, as is known, a preliminary operation in the removal of a tyre from the wheel and is normally performed at specialised workshops with the use of special machinery and equipment.

In particular, the above operation is performed by tyre-removing machines, in which a turntable having a vertical axis to which the wheel rim can be anchored via a self-centring mechanism is also equipped inferiorly with an apparatus expressly destined for debeading the tyre from the wheel. This apparatus is positioned laterally to the base of the machine, in a vertical position, and with the use of compressed-air driven equipment the edge, or bead, of the tyre is removed from the rim, by pressing against the edge in a horizontal direction, towards the inside of the rim. The operation is repeated on two or more zones of the tyre so that the whole perimeter of the bead is detached from the wheel rim.

At this stage the wheel is positioned on the horizontal turntable and with the use of further tools and device and exploiting the rotation of the table, the tyre is extracted from the rim both superiorly and inferiorly.

It is known from EP-A-1 155 880 a device for debeading tyres from wheels positioned on a turntable of a tyre-removing machine, comprising at least a tool supported at an end of a support arm which is solidly constrained to a first slide which is translatable in a parallel direction to a rotation axis of the turntable on a guide rod arranged laterally to the turntable. The tool is constrained to the support arm in such a way that the trajectory of the tool in a debeading operation is congruent with a profile of a rim of a wheel positioned on the turntable.

Obviously the above operation is laborious, in particular due to the need to displace and move the wheel, even if among several parts of the same machine, in order to perform the one-by-one stages, which are however indispensable in the complex operation of dismounting tyres from motor vehicles.

A main aim of the present invention is to provide a device for debeading tyres for removal thereof from vehicle wheels, with which device the above-described operation can be simplified.

A further aim of the invention is to provide a device with which debeading of the tyre from the wheel rim can be performed automatically and reliably. The above aim and more besides are all attained with a device for debeading tyres according to claim 1.

The hinged mechanism includes a blocking device which can be activated to enable the disc tool to be used also in operations which do not require the activation of the hinged mechanism. The presence of the blocking device is not necessary in order to perform the debeading operation.

The hinged mechanism is constrained to the support arm by a removable pivot, which enables easy mounting and dismounting.

The slide supporting the cam interacting with the hinged mechanism, to which the tool is anchored, is blockable to the lateral support guide column by simple braking means controlled directly by the hinged mechanism.

The turntable comprises a self-centring blocking device for the wheel rim, the positioning of which is automatically obtained according to the diameter of the wheel itself.

Form the above the advantages of the debeading device are evident, both in relation to the simplification of the overall dismounting operation and in relation to the contructional simplicity and the ease of mounting and dismounting the device.

Further characteristics and advantages of the present invention will better emerge from the detailed description that follows of a preferred but non-exclusive embodiment of the invention, illustrated purely by way of a nonlimiting example in the accompanying figures of the drawings, in which:
Figure 1 is an overall schematic view of a tyre-removing machine equipped with the device of the invention;
Figure 2 is a detailed view of the device of the invention, in a special use configuration;
Figure 3 is a second detailed view of the device of the invention, in a different use configuration;
Figure 4 is a detailed perspective view of the device of the preceding figures, in the dismounted configuration.

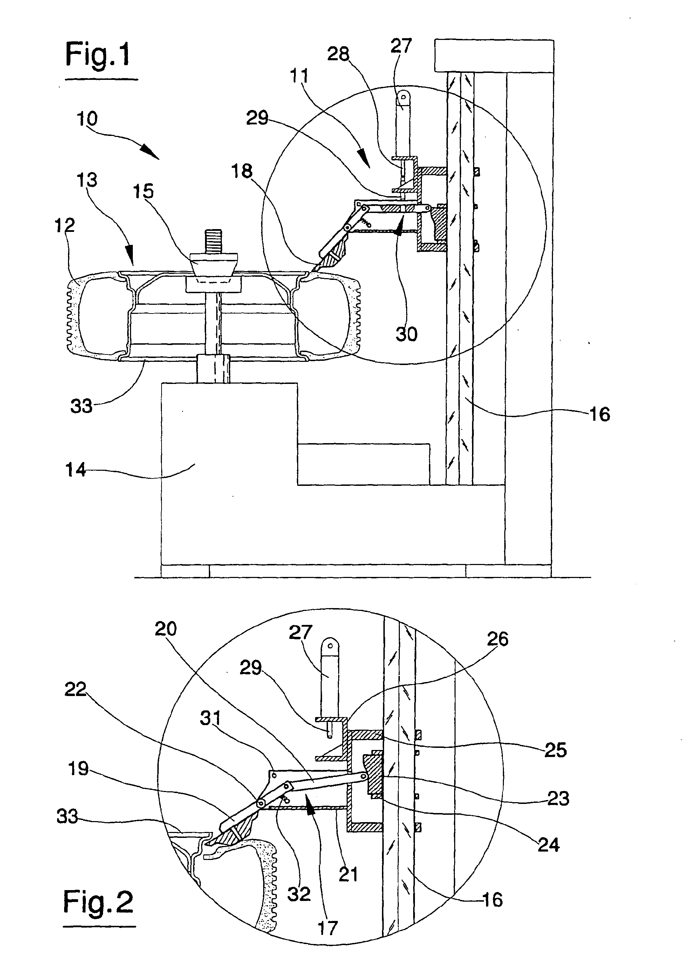

With reference to figure 1, 10 denotes in its entirety a tyre-removing machine comprising a device 11 for upper debeading of the tyre 12 of the wheel 13 which is anchored on the wheel-bearing turntable 14, by means of a self-centring device 15 which guarantees the automatic positioning of the wheel according to the diameter thereof.

The debeading device 11 is slidably constrained to a guide rod 16 which is lateral to the turntable 14. The distance between the turntable 14 and the guide rod 16 is automatically regulated according to a known method so that the disc tool 18 which is a part of the device 11 can be moved into exactly the right work position, illustrated in figure 1, at the moment when the device is called into use, by a translation downwards along the rod 16, in order to perform the debeading of the upper side of the tyre 12.

The disc tool 18 is connected to a hinge mechanism 17 made up of two jointed elements 19, 20, one of which two elements is constrained to the end of an arm 21 by a hinge connection made using a cylindrical pivot 22.

The other element 20 of the hinge mechanism 17 interacts with a free end thereof with a cam follower 23 supported by a slide 24 which is slidable on the guide rod 16. The free end of the element 20 is guided to run along a slot made in a further slide 25 internally of which the first slide 24 is slidable. The support arm 21 is supported on the other slide 25.

A bracket 26 supporting a jack 27 is anchored to the slide 25; the jack 27 is for blocking the hinge mechanism in a fixed position, when the device 11 is in a rest condition. The actuator 28 of the jack 27 is connected to a pivot 29 which is guided by the bracket 26 and which engages in a cavity 30 in the element 20 of the hinge mechanism 17.

The hinge mechanism 17 is normally pushed into contact against a strike pivot 31, thanks to the action of a contrast spring 32 interpositioned between the mechanism and the support arm 21.

The internal slide 24 is normally kept in contact with the external slide 25 in the configuration illustrated in figure 1, by special elastic return means, not illustrated in the figure.

The slide 24 is also provided with braking means interpositioned between the slide 24 and the guide rod 16, the braking means being activated following a pressing action exerted on the slide 24 by the element 20 of the hinge mechanism 17.

The tyre debeading device operates in the following way.

After having positioned the wheel 13 on the turntable 14 and obtained the automatic self-centring in relation to the diameter of the wheel, the actuator of the external slide 25 is activated to bring the tool 18 down towards the edge of the tyre 12; during this stage the jack 27 is brought into the configuration in which it unblocks the position of the hinge mechanism 17, a configuration in which the pivot 29 is retracted from the position of interference with the element 20 of the hinge mechanism.

At the moment when the disc tool 18 comes into contact with the tyre 12 a rotation couple is created with the element 19 due to the resistance to advancement the disc tool 18 encounters. Following the rotation couple, a pressing action is generated by the other element 20 of the mechanism 17, on the cam follower 23 and the slide 24.

This is sufficient to cause the braking of the slide 24 on the rod 16 and thus the free end of the element 20, while displacing downwards together with the arm 21 and the slide 25, follows the profile of the cam 23 which remains stationary in the position of figure 2. As we can observe in this figure, the element 20 displaces, with respect to the position in figure 1, in a direction towards the rod 16, and this corresponds to a rotation in a clockwise direction of the other element 19 of the hinge mechanism 17. The disc tool 18 is thus translated rotationally and penetrates into the workspace, while at the same time being arranged in a configuration with favours a minimising of the risk of interference between the disc tool 18 and the wheel rim 33.

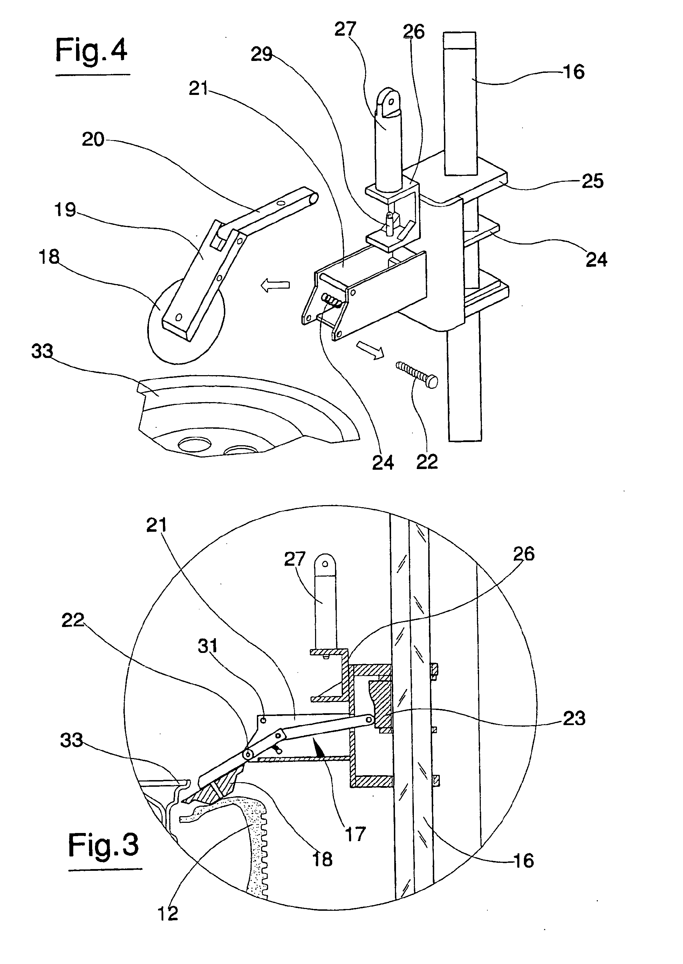

The result is that the disc tool 18, while proceeding in its pressing action against the edge of the tyre 12, modifies its own inclination so that the resulting trajectory perfectly matches the profile of the rim 33 of the wheel 13, as illustrated in figure 2 and more clearly in figure 3, in which the terminal configuration of the device 11 in the debeading operation is illustrated.

Thereafter the slide 25 is brought back upwards and the disc tool 18, thanks to the action of the return spring 32, automatically resumes the inclination of figure 1. Thus, the cam-support slide 24 is once more free to run on the guide rod 16 and newly assumes the position of figure 1 with respect to the external slide 25.

In the non-use configuration, the jack 27 is activated to position the pivot 29 connected there-to in the hinge-mechanism blocking configuration.

Figure 4 illustrates the device 11 in a configuration in which maintenance, replacement or similar operations can be carried out. It is simply obtained by extraction of the pivot 22 from the seating. Only this pivot rotatably constrains the element 19 of the hinge mechanism 17 to the support arm 21. The advantages of the structural characteristics of the device of the invention are obvious from the above description.

It is also evident that these characteristics and advantages are safeguarded even where variations and modifications are brought to the illustrated embodiment.

The structural simplicity of the device undoubtedly favours its reliability. This is safeguarded even in the presence of size modifications of the various components, which do not alter the function and interaction thereof.

The cam 23 profile could, for example, be changed though still guaranteeing the correct movement of the disc tool 18 during the whole debeading operation.

The means for braking the internal slide 24 on the guide rod 16 could obviously be of various types, as could the means for constrained, more or less flexibly, the two slides one to the other. The means for activating the slide 25 could certainly be varies according to the applications, though guaranteeing the necessary speed and precision.

The shape of the support arm 21 and the single elements of the hinge mechanism 17 might vary, though the relative constraining points would be left unaltered.

## Claims

1. A device for debeading tyres from wheels positioned on a turntable of a tyre-removing machine, comprising at least a tool (18) supported at an end of an arm (21) which is solidly constrained to a first slide (25) which is translatable in a parallel direction to a rotation axis of the turntable (14) on a guide rod (16) arranged laterally to the turntable (14), the tool (18) being constrained to the support arm (21) by a hinge mechanism (17) pivoted to the support arm (21) in such a way that the trajectory of the tool (18) in a debeading operation is congruent with a profile of a rim (33) of a wheel positioned on the turntable (14), **characterized in that** an end of said hinge mechanism (17) interacts with a cam (23) which is solidly constrained to a second slide (24) which is translatable on the lateral guide rod (16); the second slide (24), which support the cam (23), being blockable to the guide rod (16) by means for braking which are activated following a pressing action exerted on the cam (23) or the second slide (24).

2. The device of claim 1, **characterised in that** the hinge mechanism (17) comprises a first element (19) and a second element (20) which are joint-connected to one another, the first element (19) being hinged to the arm (21), a free end of the second element (20) interacting with the cam (23), the tool (18) having a disc shape and being connected to an end of the first element (19).

3. The device of claim 1, **characterised in that** the hinge mechanism (17) is constrained to the support arm (21) by means of a removable pivot (22).

4. The device of claim 3, **characterised in that** the means for braking are controlled directly by the hinge mechanism (17).

5. The device of any one of the preceding claims, **characterised in that** it comprises a jack (27) for blocking the hinge mechanism (17) with respect to the support arm (21).

6. The device of any one of the preceding claims, **characterised in that** the device (11) is translatable on the guide rod (16) into a position in which it is possible to perform a debeading operation of a side of a tyre (13) anchored on the turntable (14).

7. The device of any one of the preceding claims, **characterised in that** the turntable (14) is provided with a self-centring blocking device (15) of a rim (33), a positioning of which rim (33) is obtained automatically according to a diameter of the wheel (13), the arm (21) of the device (11) being radially aligned with respect to the self-centring device (13).

## Patentansprüche

1. Vorrichtung zum Wulstabdrücken von Rädern, die auf einem Drehtisch einer Reifen-Demontagemaschine positioniert sind, enthaltend wenigstens ein Werkzeug (18), getragen an einem Ende eines Armes (21), welcher fest an einem ersten Schlitten (25) gehalten ist, der verfahrbar ist in einer parallelen Richtung zu einer Drehachse des Drehtisches (14) entlang einer Führungsstange (16), angeordnet seitlich des Drehtisches (14), wobei das Werkzeug (18) an dem Trägerarm (21) durch einen Gelenkmechanismus (17) gehalten ist, angelenkt an den Trägerarm (21) auf solche Weise, dass die Bahn des Werkzeugs (18) während des Wulstabdrückens kongruent mit dem Profil einer Felge (33) eines auf dem Drehtisch (14) positionierten Rades ist, **dadurch gekennzeichnet, dass** ein Ende des genannten Gelenkmechanismus (17) mit einer Nocke (23) zusammenwirkt, die fest an einem zweiten Schlitten (24) angebracht ist, welcher verfahrbar ist entlang der seitlichen Führungsstange (16); wobei der zweite Schlitten (24), welcher die Nocke (23) trägt, an der Führungsstange (16) blockierbar ist, und zwar durch Bremsmittel, die infolge einer Druckwirkung aktiviert werden, ausgeübt auf die Nocke (23) oder den zweiten Schlitten (24).

2. Vorrichtung nach Patentanspruch 1, **dadurch gekennzeichnet, dass** der Gelenkmechanismus (17) ein erstes Element (19) und ein zweites Element (20) enthält, welche gelenkartig miteinander verbunden sind, wobei das erste Element (19) an den Arm (21) angelenkt ist, wobei ein freies Ende des zweiten Elementes (20) mit der Nocke (23) zusammenwirkt, und wobei das Werkzeug (18) eine Scheibenform hat und an ein Ende des ersten Elementes (19) angeschlossen ist.

3. Vorrichtung nach Patentanspruch 1, **dadurch gekennzeichnet, dass** der Gelenkmechanismus (17) an dem Trägerarm (21) gehalten ist, und zwar durch einen lösbaren Drehzapfen (22).

4. Vorrichtung nach Patentanspruch 3, **dadurch gekennzeichnet, dass** die Bremsmittel direkt durch den Gelenkmechanismus (17) gesteuert werden.

5. Vorrichtung nach einem beliebigen der vorstehenden Patentansprüche, **dadurch gekennzeichnet, dass** sie eine Winde (27) zum Blockieren des Gelenkmechanismus (17) im Verhältnis zu dem Trägerarm (21) enthält.

6. Vorrichtung nach einem beliebigen der vorstehenden Patentansprüche, **dadurch gekennzeichnet, dass** die Vorrichtung (11) entlang der Führungsstange (16) in eine Position verfahrbar ist, in welcher es möglich ist, ein Wulstabdrücken auf einer Seite eines Rades (13) vorzunehmen, das auf dem Drehtisch verankert ist.

7. Vorrichtung nach einem beliebigen der vorstehenden Patentansprüche, **dadurch gekennzeichnet, dass** der Drehtisch (14) mit einer selbstzentrierenden Blockiervorrichtung (15) für eine Felge (33) versehen ist, wobei die Positionierung der Felge (33) automatisch je nach dem Durchmesser des Rades (13) erhalten wird, und wobei der Arm (21) der Vorrichtung (11) im Verhältnis zu der selbstzentrierenden Vorrichtung (15) radial ausgerichtet ist.

## Revendications

1. Dispositif de décoincement du talon d'un pneumatique d'une roue montée sur le plateau tournant d'une machine de démontage de pneumatiques, comprenant au moins un outil (18) supporté à l'extrémité d'un bras (21) solidaire d'un premier chariot (25) pouvant translater dans une direction parallèle à un axe de rotation du plateau tournant (14) sur une tige de guidage (16) disposée latéralement au plateau tournant (14), l'outil (18) étant fixé audit bras de support (21) par un mécanisme articulé (17) pivotant sur le bras de support (21) de manière à ce que la trajectoire de l'outil (18) dans une opération de décoincement soit congruente avec un profil d'une jante (33) d'une roue positionnée sur le plateau tournant (14), **caractérisé en ce qu'**une extrémité dudit mécanisme articulé (17) interagit avec une came (23) solidaire d'un second chariot (24) translatable sur la tige latérale de guidage (16); le second chariot (24), qui supporte la came (23), pouvant être bloqué sur la tige de guidage (16) par des moyens de freinage qui sont activés en suivant une action de pression exercée sur la came (23) ou sur le second chariot (24).

2. Dispositif selon la revendication 1, **caractérisé en ce que** le mécanisme articulé (17) comprend un premier élément (19) et un second élément (20), qui sont articulés entre eux, le premier élément (19) étant articulé sur le bras (21), une extrémité libre du second élément (20) interagissant avec la came (23), l'outil (18) ayant une forme de disque et étant connecté à une extrémité du premier élément (19).

3. Dispositif selon la revendication 1, **caractérisé en ce que** le mécanisme articulé (17) est solidaire du bras de support (21) au moyen d'un pivot amovible (2-2).

4. Dispositif selon la revendication 3, **caractérisé en ce que** les moyens de freinage sont contrôlés directement par le mécanisme articulé (17).

5. Dispositif selon n'importe laquelle des revendications précédentes, **caractérisé en ce qu'**il comprend un vérin (27) pour bloquer le mécanisme articulé (17) par rapport au bras de support (21).

6. Dispositif selon n'importe laquelle des revendications précédentes, **caractérisé en ce que** le dispositif (11) est translatable sur la tige de guidage (16) dans une position dans laquelle il est possible de réaliser une opération de décoincement d'un côté d'un pneumatique (13) ancré sur le plateau tournant (14).

7. Dispositif selon n'importe laquelle des revendications précédentes, **caractérisé en ce que** le plateau tournant (14) est pourvu d'un dispositif de blocage auto-centrant (15) d'une jante (33), un positionnement de ladite jante (33) étant obtenu automatiquement selon un diamètre de la roue (13), le bras (21) du dispositif (11) étant radialement aligné par rapport au dispositif auto-centrant (13).
